# FASCICULE DE BREVET EUROPEEN

(11) **EP 2 652 083 B1**
(45) Date de publication et mention de la délivrance du brevet: **08.04.2015**
(21) Numéro de dépôt: 11794798.6
(22) Date de dépôt: 16.12.2011
(51) Int. Cl.: C09K 11/06, B44F 1/08, C07F 5/02, D21H 21/48, B42D 15/00

(54) **DOCUMENT DE SECURITE COMPORTANT UN COMPOSE MECANO LUMINESCENT REVERSIBLE**
SICHERHEITSDOKUMENT ENTHALTEND EINE REVERSIBLE MECHANOLUMINESZENTE ZUSAMMENSETZUNG
SECURITY DOCUMENT CONTAINING A REVERSIBLE MECHANOLUMINESCENT COMPOSITION

(30) Priorité: 17.12.2010 FR 1060737
(43) Date de publication de la demande: 23.10.2013
(73) Titulaire: Oberthur Fiduciaire SAS, 75008 Paris (FR)
(72) Inventeur: DERMILLY, Ella, F-35000 Rennes (FR); GILLOT, Julien, F-35135 Chantepie (FR); BORDE, Xavier, F-35410 Osse (FR); LE BOZEC, Hubert, F-35135 Chantepie (FR); REAU, Régis, F-35520 La Chapelle Des Fougeretz (FR)
(74) Mandataire: Regimbeau
(86) Numéro de dépôt international: PCT/EP2011/073049
(87) Numéro de publication internationale: WO 2012/080467

(56) Documents cités:
- WO-A1-02/062914
- WO-A1-02/062915
- US-A- 6 071 632
- G. ZHANG, ET AL.: "Polymorphism and Reversible Mechanochromic Luminescence for Solid-State Difluoroboron Avobenzone", JOURNAL OF THE AMERICAN CHEMICAL SOCIETY, vol. 132, 28 janvier 2010 (2010-01-28), pages 2160-2162, XP002628781, ACS

## Description

La présente invention se rapporte à un document de sécurité revêtu de, ou comportant, un composé mécano luminescent réversible.

La présente invention trouve une application, notamment dans le domaine de l'industrie fiduciaire et plus particulièrement dans la fabrication de documents de sécurité.

On entend par l'expression « document de sécurité », un document, par exemple en papier, qui inclut en son sein et/ou est revêtu de moyens permettant d'en sécuriser la fabrication, de manière à en rendre la reproduction frauduleuse impossible, à tout le moins particulièrement complexe, et d'en assurer l'authentification.

Dans le domaine technique des documents de sécurité, la protection contre la contrefaçon est réalisée grâce notamment à un ensemble d'éléments intégrés ou appliqués au support.

Ces éléments de sécurité sont classés selon plusieurs niveaux de sécurités. On répartit ainsi usuellement les sécurités selon trois niveaux.

Les éléments de sécurité de type luminescents sont connus de l'homme de l'art. Les encres fluorescentes, phosphorescentes à une ou multiple longueur d'onde d'excitation sont largement utilisées dans le domaine de l'impression de sécurité. Les équipements de contrôle de telles encres sont également largement connus et utilisés du grand public.

L'utilisation et la diffusion massive de ces encres notamment dans des secteurs autres que l'impression fiduciaire (pharmacie, peintures décoratives, jouets, etc.) a facilité leur approvisionnement via des voies non sécurisées (par exemple internet) rendant leur contrefaçon plus aisée.

L'objectif de la présente invention est de renforcer encore le niveau de sécurité de documents intégrants des encres fluorescentes tout en conservant leur facilité d'authentification.

Ainsi, l'invention se rapporte à un document de sécurité, notamment document fiduciaire, qui comporte en son sein ou en surface un composé mécano luminescent réversible, caractérisé en ce que ledit composé répond à la formule suivante : 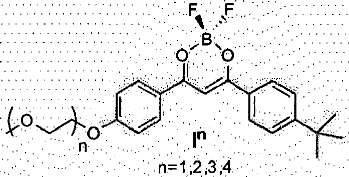 dans laquelle n est un entier compris entre 1 et 4.

L'art antérieur en la matière est notamment constitué par les documents WO-A-2002/062914, WO-A-2002/062915, US-A-6071632, G. ZHANG, ET AL.: "Polymorphism and Reversible Mechanochromic Luminescence for Solid-State Difluoroboron Avobenzone", WO 02/062914 et WO 02/062915.

Par le terme « mécano luminescent », on entend la capacité que possède un matériau à devenir luminescent (ou à changer de couleur de luminescence) sous l'effet d'une sollicitation mécanique quelconque. Cette caractéristique supplémentaire rend le composé plus difficile à produire, de sorte que cela en complexifie d'autant l'utilisation et en réduit l'imitation frauduleuse,

Par le terme « réversible », on entend le fait que ce composé perd la couleur de la luminescence particulière qu'il a acquise lors de la sollicitation mécanique. Ce phénomène s'opère en quelques instants, à température ambiante ou par chauffage. En d'autres termes, ce composé retrouve son état initial peu de temps après l'arrêt de la sollicitation mécanique.

Selon des caractéristiques avantageuses et non limitatives de ce document :
- quand ledit composé est en surface, il est intégré au sein d'une encre ou d'un vernis.
- le document comporte un élément de sécurité constitué d'au moins une zone imprimée, par exemple sous forme d'aplat ajouré ou non, cette impression étant réalisée par un procédé connu tel qu'offset, typographe, héliogravure, flexographie, sérigraphie ou taille douce notamment, sur cette zone étant imprimé, par exemple, en offset, sérigraphie ou taille-douce, à l'aide d'une composition contenant un composé tel que défini plus haut, au moins un motif,
   - ladite zone et ledit motif présentant une première couleur identique dans le spectre de la lumière visible ;
   - ladite zone et ledit motif présentant une deuxième couleur, identique sous éclairage ultra-violet ;
   - ledit motif présentant une troisième couleur, différente des première et deuxième couleurs lorsqu'il est soumis à une sollicitation mécanique.
- le document comporte un élément de sécurité constitué d'au moins une zone imprimée, par exemple sous forme d'aplat ajouré on non, cette impression étant réalisée par un procédé connu tel qu'offset, typographie, héliogravure, flexographie, sérigraphie ou taille douce notamment, sur cette zone étant imprimé, par exemple, en offset, sérigraphie ou taille-douce, à l'aide d'une composition contenant un composé tel que défini plus haut, au moins un motif,
   - ladite zone et ledit motif présentant respectivement une première et une deuxième couleur différentes dans le spectre de la lumière visible ;
   - ladite zone et ledit motif présentant une troisième couleur identique sous éclairage ultra-violet ;
   - ledit motif présentant une quatrième couleur, différente des précédentes couleurs lorsqu'il est soumis à une sollicitation mécanique.
- le document comporte un élément de sécurité constitué d'au moins une zone imprimée, par exemple sous forme d'aplat ajouré on non, cette impression étant réalisée par un procédé connu tel qu'offset, typographie, héliogravure, flexographie, sérigraphie ou taille douce notamment, sur cette zone étant imprimé, par exemple, en offset, sérigraphie ou taille-douce, à l'aide d'une composition contenant un composé tel que défini plus haut, au moins un motif, ainsi, qu'au moins une région texturée abrasive, de sorte que par superposition de la région texturée abrasive sur ledit motif et sollicitation mécanique, ledit motif devient visible sous une couleur différente de sa couleur initiale.
- le document présente une partie transparente et ladite région texturée y est intégrée.
- ladite région texturée est obtenue par embossage, de type timbre sec en taille-douce.
- le document comporte un élément de sécurité constitué d'au moins une zone imprimée, par exemple sous forme d'aplat ajouré ou non, cette impression étant réalisée par un procédé connu tel qu'offset, typographie, héliogravure, flexographie, sérigraphie ou taille douce notamment, sur cette zone étant imprimé, par exemple, en offset, sérigraphie ou en taille-douce, plusieurs motifs dont un au moins à l'aide d'une composition contenant un composé tel que défini plus haut, et présente une partie transparente comportant une région texturée abrasive qui présente la même forme que ledit motif imprimé à l'aide de ladite composition, de sorte que par superposition et sollicitation mécanique, ledit motif devient visible sous une couleur différente de sa couleur initiale.
- le document comporte un élément de sécurité constitué d'au moins une zone imprimée, par exemple sous forme d'aplat, cette impression étant réalisée par un procédé connu tel qu'offset, typographie, héliogravure, flexographie, sérigraphie ou taille douce notamment, sur cette zone étant imprimée, en offset, sérigraphie ou en taille-douce, au moins un motif comprenant deux régions adjacentes, l'une de ces régions étant imprimée à l'aide d'une composition contenant un composé tel que défini plus haut.
- ladite zone imprimée est un aplat ajouré.
- ledit composé mécano luminescent est utilisé à des fins de personnalisation du document.

D'autres caractéristiques et avantages de la présente invention apparaîtront à la lecture de la description qui va suivre.

Ainsi que cela a été indiqué plus haut, la présente invention fait usage d'un composé Iⁿ tel que défini ci-dessus.

Un exemple de synthèse possible d'une telle molécule est donné schématiquement ci-dessous.

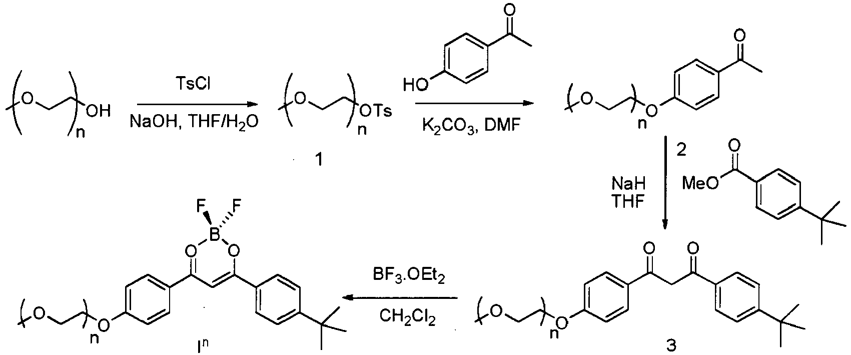

Cette synthèse est réalisée en plusieurs étapes.

La première est une étape de tosylation connue de la littérature.

La deuxième étape est un couplage de type Williamson entre le dérivé obtenu précédemment et la 4-hydroxyacétophénone

La troisième étape est une réaction de type condensation de Claisen en présence de 4-tert-butylbenzoate de méthyle. On obtient ainsi les dicétones correspondantes.

La quatrième et dernière étape est une réaction de boration obtenue précédemment par du trifluorure de bore éthérate. On obtient ainsi le composé Iⁿ avec un rendement global de 30 à 60%.

Contre toute attente, le présent demandeur a constaté que cette molécule présente des propriétés de luminescence réversible, est relativement soluble dans les solvants courants, avec des couples de couleurs caractéristiques, et peut être utilisée dans des proportions faibles, sans impact notable sur l'effet visuel recherché.

Les exemples de mises en oeuvre suivants ont été réalisés.

Une composition à usage fiduciaire a été confectionnée, en faisant usage d'une matrice « offset » incolore ou pratiquement incolore appelée en termes du métier « blanc transparent », portant la référence 9C0000S disponible auprès de la société SICPA. Cette matrice est principalement constituée d'huiles végétales siccatives, de solvants, de résines et d'additifs (charges, siccatifs etc).

Le composé Iⁿ dans lequel n est égal à 2 d'une part, et 3 d'autre part a été introduit dans cette matrice à hauteur de 10% en poids.

Après apposition sur le document et séchage, le phénomène de triboluminescence est observé dans les deux cas et de façon homogène sur l'ensemble de la zone soumise à une friction.

De plus, le retour à l'état (couleur) initial est quasiment instantané.

A l'état pur, de même que sous la forme de la matrice précitée, on note une fluorescence initiale de couleur bleue pour n = 2 et verte pour n = 3. Dans chacun des cas, la couleur émise sous l'effet de la friction est de couleur jaune.

Une deuxième matrice est testée. Il s'agit d'une matrice sérigraphique incolore pour une impression en sérigraphie à séchage aux rayons ultra-violets. Cette matrice de référence 9Z0D000, également disponible auprès de la société SICPA, est principalement constituée de monomères, d'oligomères et de solvants.

On y introduit le composé Iⁿ dans lequel n est égal à 2 à hauteur de 10 % en poids, auquel on rajoute 5% de photo-initiateur (référencé 880337 de chez SICPA). Le photo-initiateur, par exposition à la lumière UV, initie la réaction chimique en générant des espèces réactives, des radicaux libres. Ceux-ci déclenchent une réaction en chaîne liant les oligomères et les monomères de la formulation.

On note également ici un phénomène de triboluminescence réversible (couleur bleue à l'état initial et jaune sous l'effet d'une friction).

Enfin, une matrice dite « blanc transparent » pour une impression en taille douce est testée. Il s'agit de la matrice référencée 9SL0020S de la société SICPA.

Les quatre composés répondant à la formule précitée sont testés à différentes concentrations.

En tout état de cause, la triboluminescence est observée avec un bon contraste entre la fluorescence initiale (bleue ou verte) et la fluorescence après friction (jaune). Le retour à l'état initial se fait rapidement à température ambiante.

A hauteur de 5% en poids de composé I² ou I³, la triboluminescence est parfaitement observée quand on fait usage d'une épaisseur d'encre supérieure à 20 micromètres. Entre 10 et 20 micromètres, l'intensité de la fluorescence initiale est faible, mais le phénomène de triboluminescence reste observable.

A hauteur de 3% en poids de composé I² ou I³, le phénomène de triboluminescence est parfaitement observé lorsque l'épaisseur d'encre est supérieure ou égale à 25 micromètres. Entre 15 et 25 micromètres, la triboluminescence reste observable, mais avec une intensité de fluorescence initiale faible.

A hauteur de 1% en poids de composé I² ou I³, le phénomène de triboluminescence est parfaitement observé lorsque l'épaisseur d'encre est supérieure ou égale à 40 micromètres. Entre 20 et 40 micromètres, la triboluminescence reste observable, mais avec une intensité de fluorescence initiale faible.

Cela montre que le composé peut être employé en petite quantité dans des encres couramment utilisées et selon des épaisseurs habituelles.

Le composé précité se prête également à une introduction au sein d'un document de sécurité, par exemple dans la pâte à papier lorsqu'il s'agit d'un billet ou dans une matière plastique lorsqu'il s'agit d'une carte, par exemple d'identité.

Nous décrirons ci-après quelques exemples de réalisation, en référence aux dessins précités.

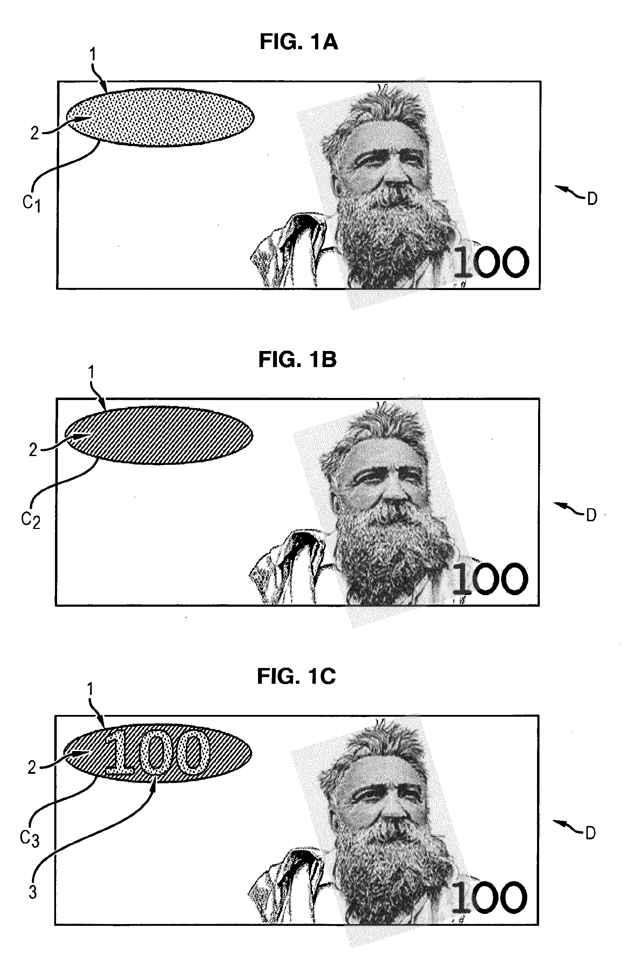

Ainsi, aux figures 1A à 1C est représenté un premier mode de réalisation dans lequel le document selon l'invention consiste en un billet de banque D.

Comme le montre la figure 1A, ce billet comporte un élément de sécurité 1 constitué ici d'une zone 2 à contour ovale, imprimée sous la forme d'un aplat qui, en variante, peut être ajouré. Sur cette zone est imprimé, en sérigraphie ou en taille-douce, un motif 3 reproduisant ici la valeur faciale du billet de banque, en l'occurrence le chiffre " 100 ".

Dans ce mode de réalisation, aussi bien la zone 2 que le motif 3 présentent une couleur identique C1 dans le spectre de la lumière visible. C'est donc la situation de la figure 1A dans laquelle le motif 3 n'est pas perceptible, ou l'est difficilement.

Cette zone 2 ainsi que le motif 3, sous un éclairage fluorescent s'illuminent d'une même couleur d'une même couleur, ou d'une couleur sensiblement identique en teinte, par exemple sous la couleur bleue (référencée C2 sur la figure). Toujours sous éclairage fluorescent, une friction exercée sur l'élément de sécurité 1 va provoquer un changement de fluorescence du motif 3, et révélant la valeur " 100 " sous une couleur de fluorescence différente C3, par exemple jaune.

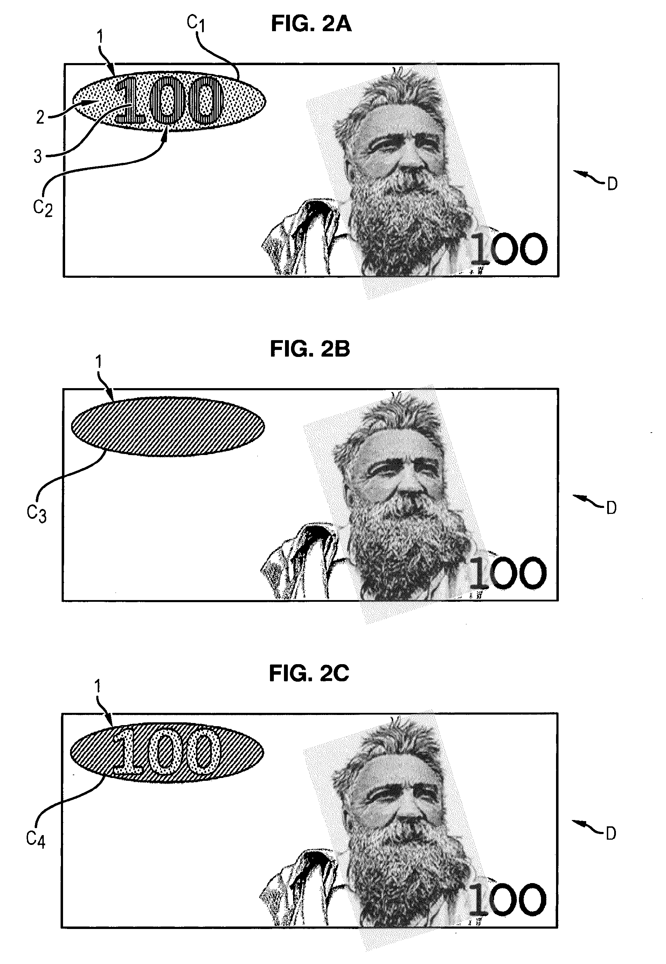

Dans le mode de réalisation de la figure 2A, l'élément de sécurité 1 est constitué d'une zone 2 d'une zone 2 imprimée sous la forme d'un aplat qui, en variante, peut être ajouré. Cette zone présente une couleur C1 dans le spectre de la lumière visible.

Un motif 3, qui ici aussi représente la valeur " 100 ", est imprimé sur la zone 2 en sérigraphie ou en taille-douce et sa couleur C2 est différente de celle de la zone 2. Dans ces conditions, le motif 3 est visible à l'oeil nu.

Lorsque l'on éclaire l'élément de sécurité par un éclairage fluorescent, la zone 2 et le motif 3 émettent alors une même couleur C3, par exemple bleue. C'est la situation de la figure 2B. Toujours sous éclairage fluorescent, la friction de l'élément de sécurité 1 par un outil pointu provoque un changement de fluorescence du motif 3, révélant la valeur « 100 » dans une couleur différente C4, par exemple jaune (Voir Figure 2C).

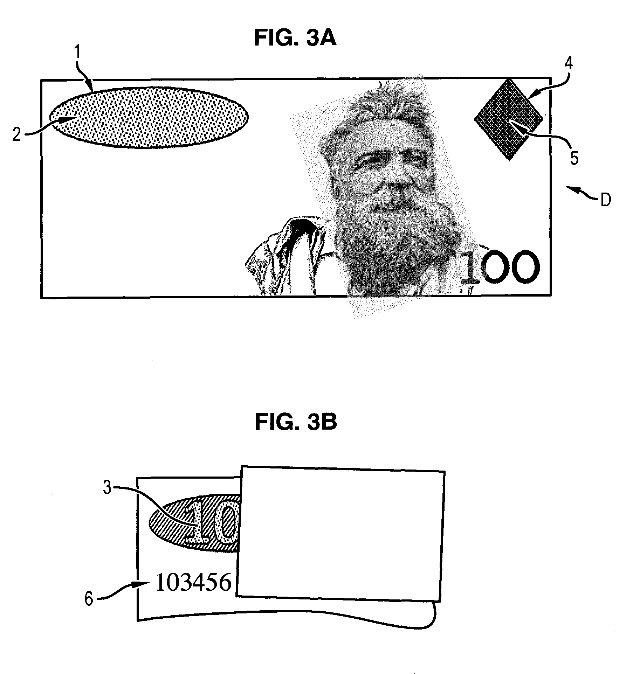

En référence aux figures 3A et 3B, on a ici affaire à un billet du même type général que celui présenté plus haut.

Toutefois, ce billet comporte une région texturée abrasive 5 de papier, d'encre ou bien un élément plastique ajouté sur le papier qui, dans une variante, pourrait être une partie transparente. Cette région texturée abrasive est par exemple obtenue par embossage de type timbre sec en taille-douce.

Dans le spectre de la lumière visible et comme montré à la figure 3A, la zone 2 et son motif (non distinguable ici, par conséquent) présentent la même couleur.

Toutefois, en repliant la région texturée abrasive 5 au dessus de la zone 2 et en opérant une friction, on révèle alors, par modification de sa couleur de fluorescence, le motif 3 du billet.

Ce motif 3 peut par exemple être constitué d'une suite de chiffres qu'il est possible par exemple de comparer avec le numéro du billet, lequel, référencé 6, est imprimé sur la même face que le motif 3.

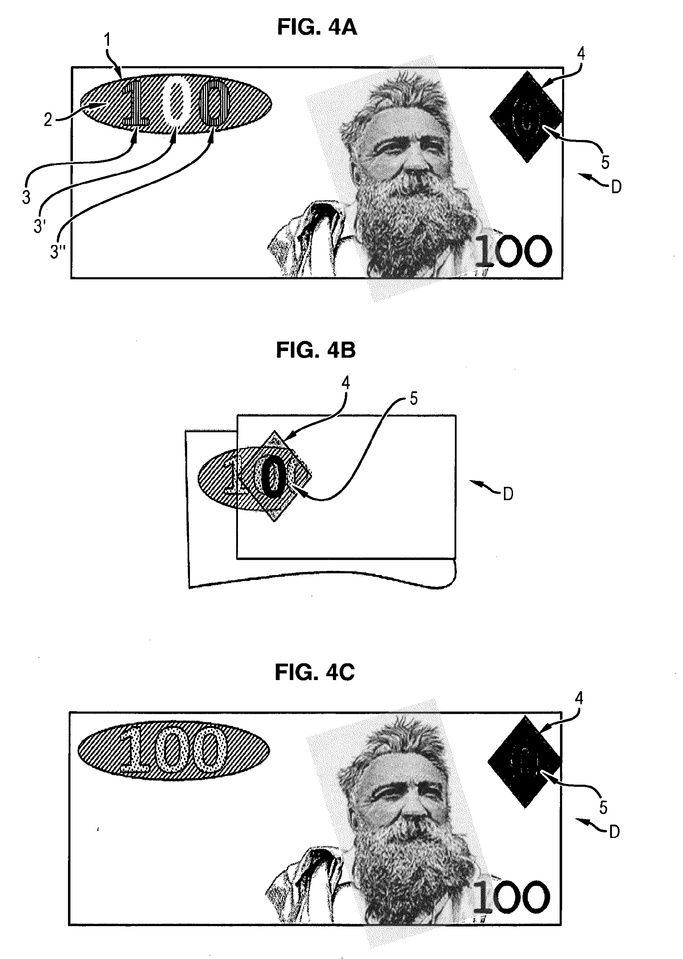

En référence aux figures 4A et 4B on a affaire, comme dans le précédent mode de réalisation, à une région texturée abrasive 5 portée par une partie 4 transparente du billet.

La région texturée présente la forme du chiffre " 0 ".

Par ailleurs, dans la zone 2 sont présents trois motifs 3, 3' et 3" qui forment ensemble le chiffre " 100 ", le motif 3' constituant en le chiffre " 0 " étant réalisé avec une encre triboluminescente, au contraire des motifs 3 et 3".

Dès lors, et comme montré à la figure 4B, dès que l'on superpose la partie 4 et que l'on opère une friction du motif 3' à l'aide de la zone texturée 5, on révèle une fluorescence qui peut être d'une couleur identique à celle des motifs 3 et 3", comme cela est représenté sur la figure 4C.

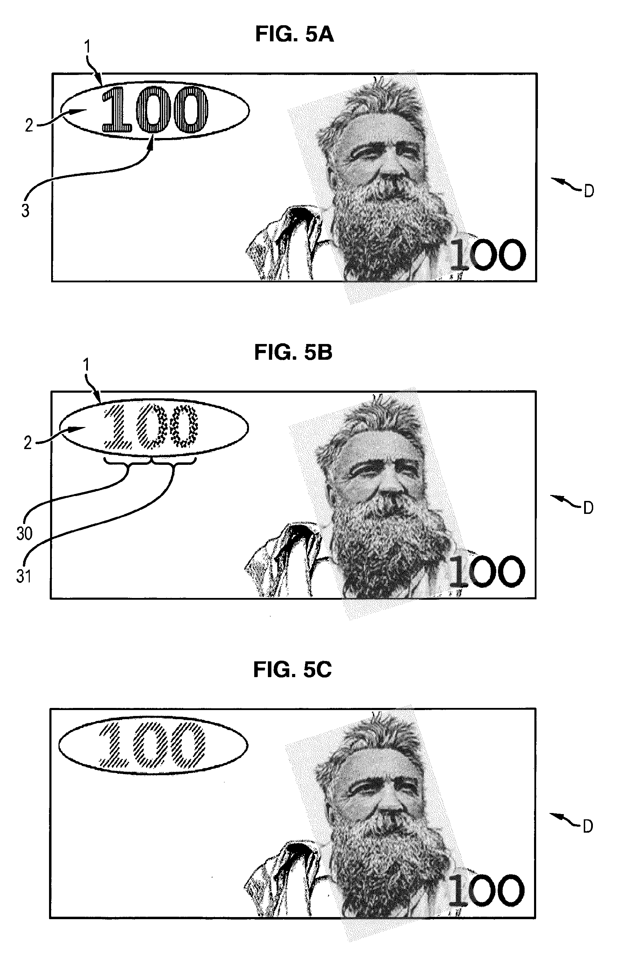

Enfin, en référence aux figures 5A à 5C, on a affaire à un motif 3 qui présente deux régions adjacentes 30 et 31, la première étant imprimée avec une encre fluorescente et la seconde avec une encre triboluminescente.

Sous éclairage à la lumière visible, l'ensemble du motif est visible de manière uniforme.

En revanche et comme montré à la figure 5B, sous un éclairage fluorescent, les régions 30 et 31 montrent des couleurs différentes. Lorsque qu'on gratte la région 31 au moyen d'un outil pointu, sa couleur de fluorescence est modifiée et devient identique à celle de la région 30. C'est la situation de la figure 5C.

Dans un autre mode de réalisation, les deux régions 30 et 31 pourraient être imprimées chacune avec une encre triboluminescente, donnant des couleurs de fluorescence identiques mais des couleurs différentes après friction.

Les différents essais menés par la demanderesse montrent qu'une valeur de longueur d'onde de lumière ultraviolette particulièrement appropriée pour provoquer la luminescence des composés utilisés est de 365 nm. Une longueur d'onde de 254 nm est également applicable, mais avec une réaction de luminescence du composé exposé qui est moins prononcée.

Le composé triboluminescent peut être incorporé dans la pâte à papier servant à la fabrication du document de sécurité, dès lors bien sûr que celui-ci est au moins partiellement en papier, ou à base de papier.

Une autre méthode qui peut être envisagée pour apposer le composé triboluminescent sur le document consiste, dans un premier temps, à le déposer sur un film de transfert à chaud - ceci par enduction ou impression standard par exemple- puis, dans un second temps, à transférer et faire adhérer ce film sur le document.

Par ailleurs, il serait possible de doter un document de sécurité conforme à la présente invention d'un troisième niveau d'authentification. A cet effet, il est possible d'intégrer dans la composition (encre ou vernis), en même temps que le composé triboluminescent, un élément de type traceur pour un troisième niveau, par exemple possédant des caractéristiques particulières d'émission aptes à être détectées par des machines de tri automatiques.

Enfin, le composé triboluminescent est susceptible d'être incorporé dans une composition compatible avec des moyens d'impression numérique (à jet d'encre par exemple), ceci à des fins de personnalisation du document.

## Revendications

1. Document de sécurité, notamment document fiduciaire, qui comporte en son sein ou en surface un composé mécano luminescent réversible, **caractérisé par le fait que** ledit composé répond à la formule suivante : 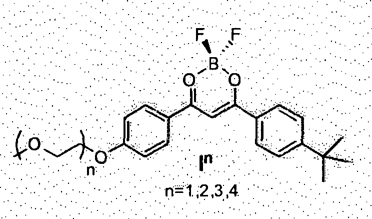 dans laquelle n est un entier compris entre 1 et 4.

2. Document selon la revendication 1, dans lequel ledit composé est en surface, **caractérisé par le fait qu'**il est intégré au sein d'une encre ou d'un vernis.

3. Document selon la revendication 2, **caractérisé par le fait qu'**il comporte un élément de sécurité (1) constitué d'au moins une zone imprimée (2), par exemple sous la forme d'un aplat, sur cette zone étant imprimé, par exemple en offset, sérigraphie ou taille-douce, à l'aide d'une composition contenant un composé tel que défini dans l'une des revendications 1 ou 2, au moins un motif (3),
- ladite zone (2) et ledit motif (3) présentant une première couleur (C1) identique dans le spectre de la lumière visible ;
- ladite zone (2) et ledit motif (3) présentant une deuxième couleur (C2) identique sous éclairage ultra-violet ;
- ledit motif (3) présentant une troisième couleur (C3), différente des première et deuxième couleurs lorsqu'il est soumis à une sollicitation mécanique.

4. Document selon la revendication 2, **caractérisé par le fait qu'**il comporte un élément de sécurité (1) constitué d'au moins une zone imprimée (2), par exemple sous la forme d'un aplat, sur cette zone étant imprimé, par exemple en offset, sérigraphie ou taille-douce, à l'aide d'une composition contenant un composé tel que défini dans l'une des revendications 1 ou 2, au moins un motif (3),
- ladite zone (2) et ledit motif (3) présentant respectivement une première et une deuxième couleur différentes (C1, C2) dans le spectre de la lumière visible ;
- ladite zone (2) et ledit motif (3) présentant une troisième couleur identique (C3) sous éclairage ultra-violet ;
- ledit motif (3) présentant une quatrième couleur (C4), différente des précédentes couleurs lorsqu'il est soumis à une sollicitation mécanique.

5. Document selon la revendication 2, **caractérisé par le fait qu'**il comporte un élément de sécurité (1) constitué d'au moins une zone imprimée (2), par exemple sous la forme d'un aplat, sur cette zone étant imprimé, par exemple en offset, sérigraphie ou taille-douce, à l'aide d'une composition contenant un composé tel que défini dans l'une des revendications 1 ou 2, au moins un motif (3), ainsi, qu'au moins une région texturée abrasive (5), de sorte que par superposition de la région texturée abrasive (5) sur ledit motif (3) et sollicitation mécanique, ledit motif devient visible sous une couleur différente de sa couleur initiale.

6. Document selon la revendication 5, **caractérisé par le fait qu'**il présente une partie transparente (4) et que ladite région texturée (5) y est intégrée.

7. Document selon la revendication 6, **caractérisé par le fait que** ladite région texturée (5) est obtenue par embossage, de type timbre sec en taille-douce.

8. Document selon la revendication 2, **caractérisé par le fait qu'**il comporte un élément de sécurité (1) constitué d'au moins une zone imprimée (2), par exemple sous la forme d'un aplat, sur cette zone étant imprimés, par exemple en offset, sérigraphie ou en taille-douce, plusieurs motifs (3, 3', 3") dont l'un au moins (3') à l'aide d'une composition contenant un composé tel que défini dans l'une des revendications 1 ou 2, et qu'il présente une partie transparente (4) comportant une région texturée abrasive (5) qui présente la même forme que ledit motif (3') imprimé à l'aide de ladite composition, de sorte que par superposition et sollicitation mécanique, ledit motif (3') devient visible sous une couleur différente de sa couleur initiale.

9. Document selon la revendication 2, **caractérisé par le fait qu'**il comporte un élément de sécurité (1) constitué d'au moins une zone imprimée (2), par exemple sous la forme d'un aplat, sur cette zone étant imprimée, par exemple en offset, sérigraphie ou en taille-douce, au moins un motif (3) comprenant deux régions adjacentes (30, 31), l'une de ces régions étant imprimée à l'aide d'une composition contenant un composé tel que défini dans l'une des revendications 1 à 4.

10. Document selon l'une quelconque des revendications 3 à 9, **caractérisé par le fait que** l'impression de ladite zone imprimée (2) est réalisée par l'un des procédés suivants ;
- offset ;
- typographie ;
- héliogravure ;
- flexographie ;
- sérigraphie ;
- taille douce.

11. Document selon l'une quelconque des revendications 3 à 10, **caractérisé par le fait que** ladite zone imprimée (2) est un aplat ajouré.

12. Document selon l'une quelconque des revendications précédentes, **caractérisé par le fait que** ledit composé mécano luminescent est utilisé à des fins de personnalisation de celui-ci.

## Patentansprüche

1. Sicherheitsdokument, insbesondere Banknote, welches in seinem Inneren oder auf seiner Oberfläche eine reversible mechanolumineszente Verbindung aufweist, **dadurch gekennzeichnet, dass** die Verbindung der folgenden Formel entspricht: 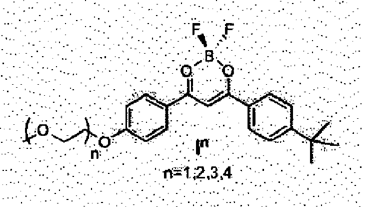 worin n eine ganze Zahl zwischen 1 und 4 ist.

2. Dokument gemäß Anspruch 1, wobei die Verbindung auf der Oberfläche ist, **dadurch gekennzeichnet, dass** sie in einer Druckfarbe oder einem Lack integriert ist.

3. Dokument gemäß Anspruch 2, **dadurch gekennzeichnet, dass** es ein Sicherheitselement (1) aufweist, das aus wenigstens einer aufgedruckten Zone (2), zum Beispiel in einheitlichem Farbton, besteht, wobei auf diese Zone, zum Beispiel durch Offsetdruck, Siebdruck oder Kupferdruck, mit Hilfe einer Zusammensetzung, die eine Verbindung wie in einem der Ansprüche 1 oder 2 definiert enthält, wenigstens ein Motiv (3) gedruckt ist,
- wobei die Zone (2) und das Motiv (3) eine im sichtbaren Lichtspektrum identische erste Farbe (C1) aufweisen;
- wobei die Zone (2) und das Motiv (3) eine unter ultraviolettem Licht identische zweite Farbe (C2) aufweisen;
- wobei das Motiv (3) eine dritte Farbe (C3) aufweist, die sich von der ersten Farbe und der zweiten Farbe unterscheidet, wenn es einer mechanischen Beanspruchung ausgesetzt ist.

4. Dokument gemäß Anspruch 2, **dadurch gekennzeichnet, dass** es ein Sicherheitselement (1) aufweist, das aus wenigstens einer aufgedruckten Zone (2), zum Beispiel in einheitlichem Farbton, besteht, wobei auf diese Zone, zum Beispiel durch Offsetdruck, Siebdruck oder Kupferdruck, mit Hilfe einer Zusammensetzung, die eine Verbindung wie in einem der Ansprüche 1 oder 2 definiert enthält, wenigstens ein Motiv (3) gedruckt ist,
- wobei die Zone (2) und das Motiv (3) jeweils eine im sichtbaren Lichtspektrum unterschiedliche erste und zweite Farbe (C1, C2) aufweisen;
- wobei die Zone (2) und das Motiv (3) eine unter ultraviolettem Licht identische dritte Farbe (C3) aufweisen;
- wobei das Motiv (3) eine vierte Farbe (C4) aufweist, die sich von den zuvor genannten Farben unterscheidet, wenn es einer mechanischen Beanspruchung ausgesetzt ist.

5. Dokument gemäß Anspruch 2, **dadurch gekennzeichnet, dass** es ein Sicherheitselement (1) aufweist, das aus wenigstens einer aufgedruckten Zone (2), zum Beispiel in einheitlichem Farbton, besteht, wobei auf diese Zone, zum Beispiel durch Offsetdruck, Siebdruck oder Kupferdruck, mit Hilfe einer Zusammensetzung, die eine Verbindung wie in einem der Ansprüche 1 oder 2 definiert enthält, wenigstens ein Motiv (3) gedruckt ist, sowie wenigstens einen abrasiven texturierten Bereich (5) aufweist, derart, dass bei Überlagerung des abrasiven texturierten Bereichs (5) auf dem Motiv (3) und mechanischer Beanspruchung das Motiv in einer Farbe sichtbar wird, die sich von seiner ursprünglichen Farbe unterscheidet.

6. Dokument gemäß Anspruch 5, **dadurch gekennzeichnet, dass** es einen transparenten Abschnitt (4) aufweist, und dass der texturierte Bereich (5) darin integriert ist.

7. Dokument gemäß Anspruch 6, **dadurch gekennzeichnet, dass** der texturierte Bereich (5) durch Prägen mit Trockenstempel im Kupferdruck erhalten wird.

8. Dokument gemäß Anspruch 2, **dadurch gekennzeichnet, dass** es ein Sicherheitselement (1) aufweist, das aus wenigstens einer aufgedruckten Zone (2), zum Beispiel in einheitlichem Farbton, besteht, wobei auf diese Zone, zum Beispiel durch Offsetdruck, Siebdruck oder Kupferdruck, mehrere Motive (3, 3' 3"), darunter wenigstens eines (3') mit Hilfe einer Zusammensetzung, die eine Verbindung wie in einem der Ansprüche 1 oder 2 definiert enthält, aufgedruckt sind, und dass es einen transparenten Abschnitt (4) aufweist, welcher einen abrasiven texturierten Bereich (5) aufweist, der die gleiche Form wie das Motiv (3'), das mit Hilfe der Zusammensetzung aufgedruckt wurde, aufweist, derart, dass bei Überlagerung und mechanischer Beanspruchung das Motiv (3') in einer Farbe sichtbar wird, die sich von seiner ursprünglichen Farbe unterscheidet.

9. Dokument gemäß Anspruch 2, **dadurch gekennzeichnet, dass** es ein Sicherheitselement (1) aufweist, das aus wenigstens einer aufgedruckten Zone (2), zum Beispiel in einheitlichem Farbton, besteht, wobei auf diese Zone, zum Beispiel durch Offsetdruck, Siebdruck oder Kupferdruck, wenigstens ein Motiv (3), welches zwei aneinandergrenzende Bereiche (30, 31) umfasst, aufgedruckt ist, wobei einer dieser Bereiche mit Hilfe einer Zusammensetzung, die eine Verbindung wie in einem der Ansprüche 1 oder 4 definiert enthält, aufgedruckt ist.

10. Dokument gemäß irgendeinem der Ansprüche 3 bis 9, **dadurch gekennzeichnet, dass** der Aufdruck der aufgedruckten Zone (2) durch eines der folgenden Verfahren bewirkt wird:
- Offset-Druck;
- Typographie;
- Tiefdruck;
- Flexodruck;
- Siebdruck;
- Kupferdruck.

11. Dokument gemäß irgendeinem der Ansprüche 3 bis 10, **dadurch gekennzeichnet, dass** die aufgedruckte Zone (2) ein durchbrochener Aufdruck mit einheitlichem Farbton ist.

12. Dokument gemäß irgendeinem der vorhergehenden Ansprüche, **dadurch gekennzeichnet, dass** die mechanolumineszente Verbindung zum Zwecke der Personalisierung des Dokuments eingesetzt wird.

## Claims

1. A security document, especially fiduciary document, which comprises inside it or at the surface a reversible mechanoluminescent compound, **characterised in that** said compound responds to the following formula: 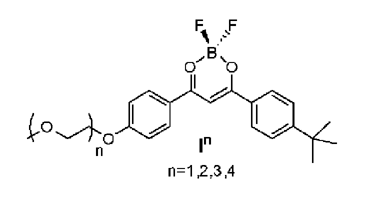 in which n a whole number between 1 and 4.

2. The document as claimed in Claim 1, in which said compound is at the surface, **characterised in that** it is integrated into ink or varnish.

3. The document as claimed in Claim 2, **characterised in that** it comprises a security element (1) comprising at least one printed zone (2), for example in the form of a patch, on this zone being printed, for example, via offset, screen printing or copper-plate engraving, by means of a composition containing a compound such as defined in any one of Claims 1 or 2, at least one pattern (3),
- said zone (2) and said pattern (3) having a first colour (C1) identical in the visible light spectrum;
- said zone (2) and said pattern (3) having a second colour (C2) identical under ultra-violet light;
- said pattern (3) having a third colour (C3), different to the first and second colours when it is subjected to mechanical stress.

4. The document as claimed in Claim 2, **characterised in that** it comprises a security element (1) comprising at least one printed zone (2), for example in the form of a patch, on this zone being printed, for example, via offset, screen printing or copper-plate engraving, by means of a composition containing a compound such as defined in any one of Claims 1 or 2, at least one pattern (3),
- said zone (2) and said pattern (3) having respectively a first and a second colour different (C1, C2) in the visible light spectrum;
- said zone (2) and said pattern (3) having a third colour identical (C3) under ultra-violet light;
- said pattern (3) having a fourth colour (C4), different to the preceding colours when it is subjected to mechanical stress.

5. The document as claimed in Claim 2, **characterised in that** it comprises a security element (1) comprising at least one printed zone (2), for example in the form of a patch, on this zone being printed, for example, via offset, screen printing or copper-plate engraving, by means of a composition containing a compound such as defined in any one of Claims 1 or 2, at least one pattern (3), and at least one abrasive textured region (5), such that said pattern becomes visible in a colour different to its initial colour, by superposition of the abrasive textured region (5) on said pattern (3), and mechanical stress.

6. The document as claimed in Claim 5, **characterised in that** it has a transparent part (4) and **in that** said textured region (5) is integrated therein.

7. The document as claimed in Claim 6, **characterised in that** said textured region (5) is obtained by embossing, of copper-plate dry seal type engraving type.

8. The document as claimed in Claim 2, **characterised in that** it comprises a security element (1) comprising at least one printed zone (2), for example in the form of a patch, on this zone being printed, for example, via offset, screen printing or copper-plate engraving, several patterns (3, 3', 3") including one at least (3') by means of a composition containing a compound such as defined in any one of Claims 1 or 2, and that it has a transparent part (4) comprising an abrasive textured region (5) which has the same form as said pattern (3') printed by means of said composition, such that said pattern (3') becomes visible in a colour different to its initial colour, by superposition and mechanical stress.

9. The document as claimed in Claim 2, **characterised in that** it comprises a security element (1) comprising at least one printed zone (2), for example in the form of a patch, on this zone being printed, for example, via offset, screen printing or copper-plate engraving, at least one pattern (3) comprising two adjacent regions (30, 31), one of these regions being printed by means of a composition containing a compound such as defined in any one of Claims 1 to 4.

10. The document as claimed in any one of Claims 3 to 9, **characterised in that** printing of said printed zone (2) is carried out by the one of the following processes:
- offset;
- typography;
- heliogravure;
- flexography;
- screen printing;
- copper-plate engraving.

11. The document as claimed in any one of Claims 3 to 10, **characterised in that** said printed zone (2) is an open-work patch.

12. The document as claimed in any one of the preceding claims, **characterised in that** said mechanoluminescent compound is used for personalisation of the latter.
